# EUROPEAN PATENT APPLICATION

(11) **EP 4 093 004 A1**
(43) Date of publication of application: **23.11.2022**
(21) Application number: 21740835.0
(22) Date of filing: 18.01.2021
(51) Int. Cl.: H04M 3/51

(54) **CALL CONNECTION METHOD AND APPARATUS, STORAGE MEDIUM, AND TERMINAL**

(30) Priority: 17.01.2020 CN 202010054073
(71) Applicant: GUANGDONG OPPO MOBILE TELECOMMUNICATIONS CORP., LTD., Wusha, Chang'an Dongguan, Guangdong 523860 (CN)
(72) Inventor: DENG, Junjie, Dongguan City, Guangdong 523860 (CN)
(74) Representative: Fassio, Valeria
(86) International application number: PCT/CN2021/072418
(87) International publication number: WO 2021/143899

(57) **Abstract**

Disclosed are a call connection method and apparatus, a storage medium and a terminal. The method comprises: receiving a call request input for customer service connection access displayed on an order detail interface, and acquiring order information of the order detail interface; and connecting to a customer service device corresponding to the customer service connection access on the basis of the call request, and displaying the order information on a call conversation interface. In the present embodiments, an order detail interface contains customer service connection access, and during service processing, if a customer service agent is required to provide help, a user does not need to specially enter a system telephone to make a dial-up call, and the user can have a conversation with the customer service agent merely by means of inputting a call request for access; for a customer service call made on the order detail interface, related order information can be synchronously displayed on a call conversation interface, so as to facilitate the user in quickly reading the order information and providing same for the customer service agent, thereby reducing the operation process of switching back and forth between interfaces; and an information provision process is simple and convenient, and the communication efficiency is higher.

## Description

### TECHNICAL FIELD

The present disclosure relates to the field of computer technologies, and in particularly, to a call connection method, a call connection apparatus, a storage medium, and a terminal.

### BACKGROUND

Using a telephone call function on a mobile terminal, a first terminal user and a second terminal user can realize a remote call. A dialing call can eliminate the running back and forth of both sides, save a lot of time and physical consumption, and effectively improve the communication efficiency of the both sides.

When a user uses a mobile terminal to handle relevant businesses online (such as telephone recharge, online shopping, etc.), if there is a problem in the process of handling the business, based on text prompt information provided on a page, the user still cannot solve the problem, he will usually choose to use a system telephone to call a customer service agent for intervention.

During having a conversation with the customer service agent, a terminal user is usually required to provide some information related to the business to the customer service agent, such as an order number and a business transaction code. When information to be provided is complex, the user needs to switch back and forth between a call conversation interface and an order page to view and enter relevant information (or verbally inform) to the customer service agent. This process is complex and cumbersome.

### SUMMARY

Embodiments of the present disclosure provide a call connection method, a call connection apparatus, a storage medium and a terminal, which can solve the above-mentioned problem of the complex and cumbersome process of entering the relevant information during having a conversation with the customer service agent. Technical solutions are as follows.

In a first aspect, an embodiment of the present disclosure provides a call connection method, and the method includes:
receiving a call request inputted by an interaction element displayed on an order detail interface and obtaining order information of the order detail interface; and
connecting, based on the call request, a customer service device corresponding to the interaction element, and displaying the order information on a call conversation interface.

In a second aspect, an embodiment of the present disclosure provides a call connection apparatus, and the apparatus includes:
an order information obtaining module, configured to receive a call request inputted by an interaction element displayed on an order detail interface and obtain order information of the order detail interface; and
an order information displaying module, configured to connect, based on the call request, a customer service device corresponding to the interaction element, and display the order information on a call conversation interface.

In a third aspect, an embodiment of the present disclosure provides a non-transitory computer-readable storage medium, the non-transitory computer-readable storage medium is stored with computer programs therein, the computer programs are configured to, when being executed by a processor, implement blocks of above method.

In a fourth aspect, an embodiment of the present disclosure provides a terminal, including: a memory, a processor and computer programs stored in the memory and executable by the processor, the processor is configured to, when executing the computer programs, implement blocks of above method.

Beneficial effects brought by the technical solutions provided by the embodiments of the present disclosure include at least:
in the call connection method provided by the embodiment of the present disclosure, the terminal receives the call request inputted by the user aiming at the interaction element on the order detail interface, obtains the order information of the order detail interface, connects, based on the call request, the customer service device corresponding to the interaction element, and displays the order information on the call conversation interface. The order detail interface in this embodiment includes the interaction element. If the customer service agent is required to provide help during processing the business, the user does not need to specially enter a system phone to make a dial-up call, and the user can have a conversation with the customer service agent merely by means of inputting the call request for the access. For the customer service call made on the order detail interface, the relevant order information will be displayed on the call conversation interface synchronously, therefore, it is convenient for the user to quickly read the order information and provide same to the customer service agent, and thereby reducing the operation process of switching back and forth between interfaces. The information providing process is simple and convenient, and the communication efficiency is higher.

### BRIEF DESCRIPTION OF THE DRAWINGS

In order to explain the technical solutions in the embodiments of the present disclosure more clearly, the drawings needed in the description of the embodiments or the related art will be briefly introduced below. It is obvious that the drawings in the following description are only some embodiments of the present disclosure. For those skilled in the art, other drawings can be obtained according to these drawings without paying creative work.
FIG. 1 illustrates a schematic flowchart of a call connection method according to an embodiment of the present disclosure.
FIG. 2 illustrates a schematic view of a process deduction of a call connection method according to an embodiment of the present disclosure.
FIG. 3 illustrates a schematic flowchart of a call connection method according to an embodiment of the present disclosure.
FIG. 4 illustrates a schematic view of an order detail interface according to an embodiment of the present disclosure.
FIG. 5 illustrates a schematic view of a call conversation interface according to an embodiment of the present disclosure.
FIG. 6 illustrates a schematic flowchart of a call connection method according to an embodiment of the present disclosure.
FIG. 7 illustrates a schematic view of a call conversation interface according to an embodiment of the present disclosure.
FIG. 8 illustrates a schematic structural view of a call connection apparatus according to an embodiment of the present disclosure.
FIG. 9 illustrates a schematic structural view of a call connection apparatus according to an embodiment of the present disclosure.
FIG. 10 illustrates a schematic structural view of a call connection apparatus according to an embodiment of the present disclosure.
FIG. 11 illustrates a schematic structural block diagram of a terminal according to an embodiment of the present disclosure.

### DETAILED DESCRIPTION OF EMBODIMENTS

In order to make purposes, technical solutions, and advantages of the present disclosure clearer, the embodiments of the present disclosure will be further described in detail below in combination with the accompanying drawings.

When the following description relates to the drawings, unless otherwise indicated, the same numbers in the different drawings represent the same or similar elements. The embodiments described in the following illustrated embodiments do not represent all embodiments consistent with the present disclosure. On the contrary, they are only examples of devices and methods consistent with some aspects of the present disclosure as detailed in the attached claims.

In the description of the present disclosure, it should be understood that the terms "first", "second" and the like are only used for descriptive the purposes and cannot be understood as indicating or implying relative importance. For those skilled in the art, the specific meaning of the above terms in the present disclosure can be understood in specific circumstances. In addition, in the description of the present disclosure, unless otherwise specified, "multiple" refers to two or more, "and/or" describes an association relationship of the associated objects, indicating that there can be three relationships, for example, A and/or B, it can mean that there are three situations: A alone, A and B at the same time, and B alone. The character "/" generally indicates that the front and rear associated objects are an "or" relationship.

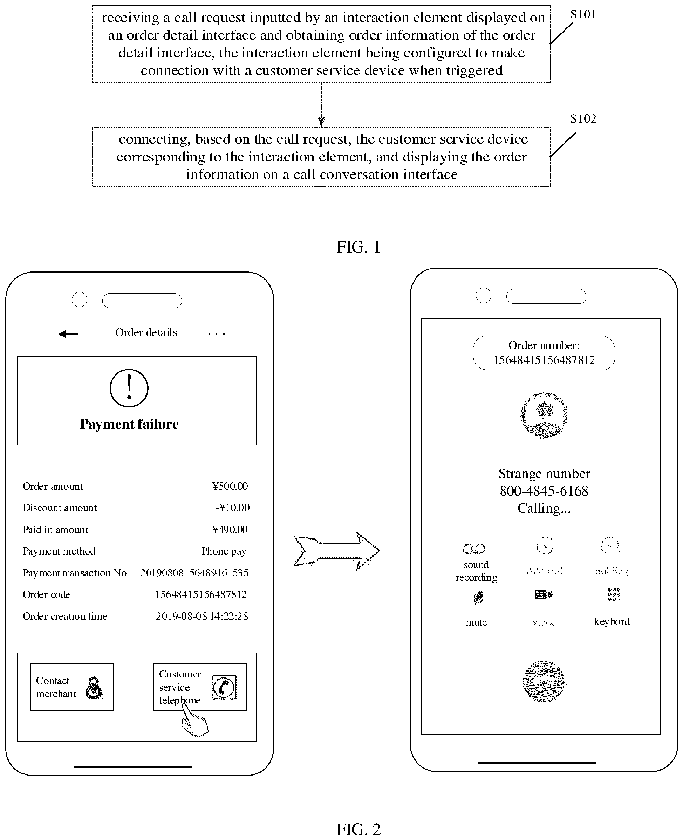

A call connection method provided by embodiments of the present disclosure will be described in detail below in combination with FIG. 1 to FIG. 7.

Please refer to FIG. 1, which illustrates a schematic flowchart of a call connection method according to an embodiment of the present disclosure.

As illustrated in FIG. 1, the method of the embodiment of the present disclosure may begin from block S101 to block S102.

At the block S101, receiving a call request inputted by an interaction element displayed on an order detail interface and obtaining order information of the order detail interface, the interaction element being configured to make connection with a customer service device when triggered.

When a user completes a corresponding operation for a commodity, an order detail interface will be generated, which includes a total price of the commodity, a discount amount, whether payment is successful and other information related to the commodity. In particular, the order detail interface in this embodiment further includes the interaction element. When there is a problem with payment, the order detail interface will display a corresponding problem and solutions, the user can solve the problem based on prompts on the order detail interface, or can ask a customer service agent for help through the interaction element.

The interaction element may include a button with a telephone icon or a customer service telephone number displayed in text. On the order detail interface, for the displayed interaction element, when the user inputs the call request through touch (click/press), voice, etc., a terminal obtains the order information on the order detail interface.

Information that may be used during having a conversation with the customer service agent is defined as the order information, such as an order number, a payment transaction code and order problem details. The order information can be one or more pieces of information.

In some embodiments, the order information can be determined based on certain rules, for example, for the same type of commodities, information often asked in the process of historical customer service calls can be obtained; or some information is manually set as the order information.

At the block S102, connecting, based on the call request, the customer service device corresponding to the interaction element, and displaying the order information on a call conversation interface.

The interaction element on the order detail interface of the commodity corresponds to the customer service device. The customer service device has a call function. Through this access, a terminal user can dial a customer service agent hotline, which is configured to provide help and support for users. Customer service devices corresponding to different commodities can be the same or different.

When the interaction element is the telephone number displayed in text, the terminal connects the customer service device based on the telephone number and displays the obtained order information on the call conversation interface. During the call, the user can view the order information displayed on the call conversation interface at any time and provide the order information to the customer service. When the interaction element is the button with the telephone icon, the terminal can obtain, based on the call request, the customer service telephone number corresponding to the interaction element, connect the customer service device based on the telephone number, and display the order information on the call conversation interface.

The user can send, based on the displayed order information, the order information to the customer service by voice or text input.

Please refer to FIG. 2, which illustrates a schematic view of a process deduction of a call connection method according to an embodiment of the present disclosure.

A left side in FIG. 2 illustrates a display interface that pop-ups when online shopping fails to pay for an object. The display interface (order detail interface) includes multiple information such as an order payment result (i.e., payment failure), an order amount, a discount amount, etc. When the user cannot find a reason for the payment failure based on the purchase process and the information displayed on the order detail interface to solve the problem, he can click a customer service telephone button at a bottom of a screen to connect the customer service agent to solve the problem through the customer service support.

The terminal receives the call request inputted by the user aiming at the customer service telephone button and obtains the order number (order information). Since the interaction element in FIG. 2 is an identification button of the customer service telephone, the terminal needs to obtain the customer service telephone number and then call out and enter an interface illustrated on a right side of FIG. 2. As illustrated in the right side of FIG. 2, after the customer service call is made, the terminal displays the order number on the call conversation interface, and the user can provide this information to the customer service agent in time during the call.

In other embodiments, after the customer service call is made, the terminal can display the order number on the call conversation interface after the call is successfully connected.

The call connection method provided in the embodiment of the present disclosure, the terminal receives the call request inputted by the user aiming at the interaction element on the order detail interface and obtains the order information on the order detail interface, connects the customer service device corresponding to the interaction element based on the call request, and displays the order information on the call conversation interface. The order detail interface in this embodiment includes the interaction element, if the customer service agent is required to provide help during processing the business, the user does not need to specially enter a system phone to make a dial-up call, but only needs to input the call request for this access to make a call with the customer service agent, and based on the customer service call made from this order detail interface, the relevant order information will be displayed on the call conversation interface simultaneously, thus facilitating the user to quickly read the order information and provide it to the customer service. This makes it easy for users to quickly read the order information and provide it to the customer service agent, reducing the operation process of switching back and forth between interfaces, making the information providing process simple and convenient, and making communication more efficient.

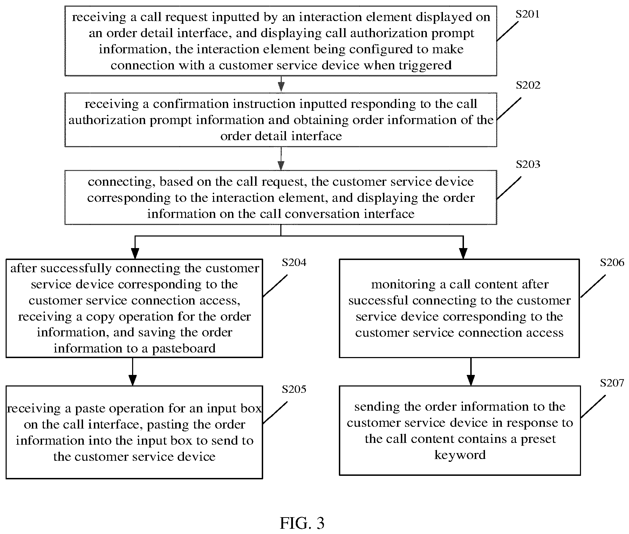

Referring to FIG. 3, which illustrates a schematic flowchart of a call connection method according to an embodiment of the present disclosure.

As illustrated in FIG. 3, the method described in the embodiment of the present disclosure may begin from block S201 to block S207.

At the block S201, receiving a call request inputted by an interaction element displayed on an order detail interface, and displaying call authorization prompt information, the interaction element being configured to make connection with a customer service device when triggered.

The interaction element on the order detail interface is configured to connect the customer service agent. When the user calls the customer service agent in the order detail interface, the terminal may output the call authorization prompt information. The call authorization prompt information includes an authorization content and a choice of whether to accept the authorization, which may be, for example, permission for relevant information to be obtained, permission for a call to be made, etc.

At the block S202, receiving a confirmation instruction inputted responding to the call authorization prompt information and obtaining order information of the order detail interface.

For the displayed call authorization prompt information, when the user selects the authorization, the terminal receives the confirmation instruction of the authorization inputted by the user and obtains the order information of the order detail interface. The order information may be, for example, an order creation time, an amount paid for the commodities, etc.

This block is not described in detail can be specifically referred to the block S101, and will not be repeated here.

At the block S203, connecting, based on the call request, the customer service device corresponding to the interaction element, and displaying the order information on the call conversation interface.

The interaction element on the order detail interface of the commodity corresponds to a customer service number/customer service device, through the access, the user can dial a customer service hotline to ask questions. For multiple different commodities, based on the relevant settings of the application to which the commodities belong, the interaction element for the commodities of the same category can correspond to the same customer service number/customer service device.

When the interaction element is a telephone number, the terminal dials the customer service device and displays the obtained order information on the call conversation interface, and the user can view the order information displayed on the interface at any time during the call and provide the information to the customer service agent in due course, and the block S204 or S206 is executed.

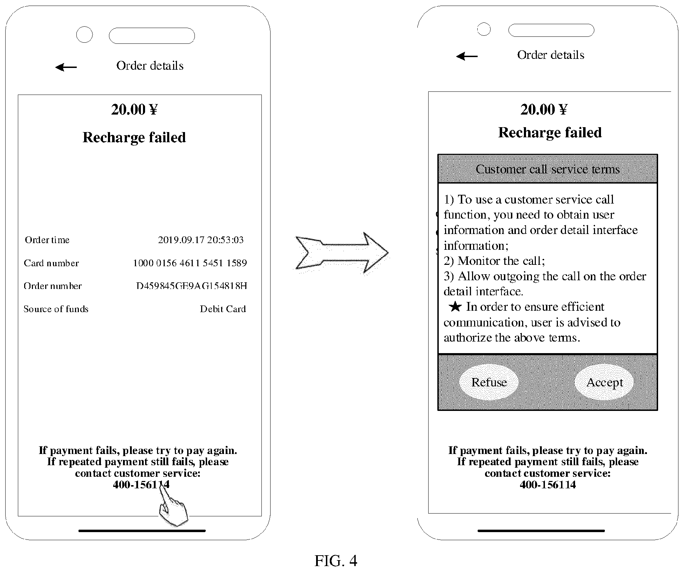

As illustrated in FIG. 4, after the user clicks on the customer service telephone number at the bottom of the screen and inputs the call request, a column of the call authorization prompt information pops up on the order detail interface (illustrated in a right side of FIG. 4), the column of the call authorization prompt information includes the information that the terminal will obtain after the authorization and phone call out authority.

For the call authorization prompt information, if the authorization is agreed, the call can be made directly on the order detail interface, and the terminal obtains the relevant information on the order detail interface and displays it on the call conversation interface (multiple information can be displayed on the call conversation interface at the same time). If the authorization is refused, the user can only switch to a system phone dialing interface to call the customer service agent, but cannot call directly on the order detail interface, and the terminal does not obtain the relevant information on the order detail interface. The output of the authorization prompt information can avoid customer service calls caused by false triggering.

At the block S204, after successfully connecting the customer service device corresponding to the interaction element, receiving a copy operation for the order information, and saving the order information to a pasteboard.

In order to facilitate text input during the call, the call conversation interface in this embodiment is provided with the input box, the user can long press the order information on the call conversation interface to copy it, and then paste it into the input box.

Of course, the terminal in this embodiment can also display a copy button when the order information is displayed on the call conversation interface. During the call, if the user needs to input the order information to the customer service agent, he can quickly copy the information by simply clicking the copy button. By copying and pasting with one click, the user does not need to input word by word, and saving operation time.

At the block S205, receiving a paste operation for an input box on the call conversation interface, pasting the order information into the input box to send to the customer service device.

The user may trigger the paste operation by pressing for several seconds on the input box to paste the order information saved on the pasteboard into the input box, and the terminal receives the pasted information and sends the information to the customer service device.

In particular, the terminal can give corresponding feedback (e.g., vibration) and clear the information in the input box after the information is sent successfully. The clearing of the input box can facilitate the subsequent input of other information.

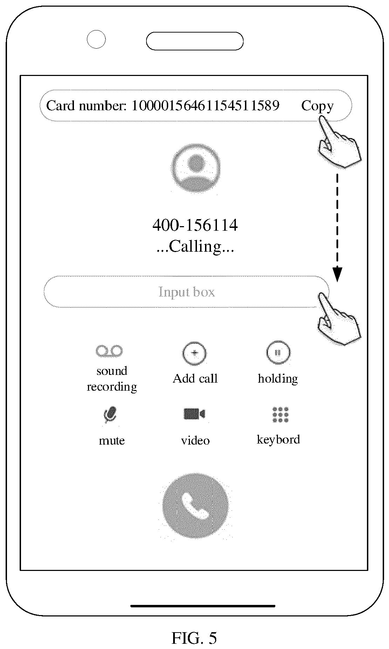

As illustrated in FIG. 5, which illustrates a schematic view of a call conversation interface according to an embodiment of the present disclosure.

During having a conversation with the customer service agent, if the user is asked to input the card number information, he can copy the information with one click by clicking the copy button illustrated in the figure, and then long pressing the input box to paste the copied information into it, and the terminal will send the information to the customer service device.

The order information and the copy button illustrated in this figure can be displayed after the user has made a successful call with the customer service agent.

At the block S206, monitoring a call content after successful connecting the customer service device corresponding to the interaction element.

After successfully connecting the customer service device, the embodiment of the present disclosure can monitor the call content between the customer service and the user. The monitoring is used to obtain the keywords/words contained in the call content, obtain the corresponding order information (target information) based on the keywords/words and display it on the call conversation interface.

The extraction of the call voice content and keywords/words can be done with the help of some existing algorithms, such as Hidden Markov Models (HMM), term frequency-inverse document frequency (TF-IDF) algorithm and Text Rank algorithm.

At the block S207, sending the order information to the customer service device in response to the call content contains a preset keyword.

The preset keyword may be, for example, an order number, a transaction code, a payment, etc.

When the customer service call content includes the preset keyword, the terminal sends the order information corresponding to the preset keyword to the customer service device. The preset keyword extracted from the call content may be multiple.

It should be noted that the blocks S204-S205 require manual operation (copy and paste) by the user to complete the sending of information, while the sending of information in the blocks S206-S207 is completely controlled by the terminal and is automatic, without manual operation by the user.

In the call connection method provided in the embodiment of the present disclosure, the terminal first can obtain the user's authorization before calling the customer service agent on the order detail interface, and obtain the order information and call out the phone with the user's permission; obtaining the authorization of the user not only respects user privacy, but also avoids customer service calls caused by false triggering. Based on the authorization of the user, the terminal calls out the customer service phone and displays the order information on the call conversation interface, the call conversation interface in this embodiment includes the input box to facilitate the user to paste the order information with one click. The embodiment can determine the order information required by the customer service agent by monitoring the call content, and automatically send the information to the customer service device through the terminal control, the process does not need the user's manual operation, the information sending speed is faster and the communication efficiency is higher.

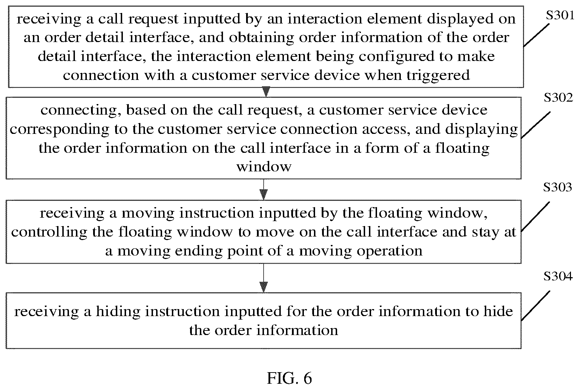

Please refer to FIG. 6, which illustrates a schematic flowchart of a call connection method according to an embodiment of the present disclosure.

As illustrated in FIG. 6, the method of the embodiment of the present disclosure may begin from block S301 to block S304.

At the block S301, receiving a call request inputted by an interaction element displayed on an order detail interface, and obtaining order information of the order detail interface, the interaction element being configured to make connection with a customer service device when triggered.

When the user completes the corresponding operation for a commodity, an order detail interface will be generated, which contains a total price of the commodity, a discount amount, whether payment is successful and other information related to the commodity. In particular, the interface in this embodiment further includes the interaction element. When there is a problem with payment, the order detail interface will display the corresponding problem and solutions, the user can solve the problem based on prompts on order detail interface, or he can ask the customer service agent for help through the interaction element.

The interaction element refers to a button with a telephone icon or a customer service telephone number displayed in text. On the order detail interface, for the displayed interaction element, when the user inputs the call request through touch (click/press), voice, etc., the terminal obtains the order information on the order detail interface.

Information that may be used during the customer service call is defined as the order information, such as an order number, a payment transaction code and order problem details. The order information can be one or more pieces of information.

In some embodiments, the order information can be determined based on certain rules, for example, for the same type of commodities, the information often asked in the process of historical customer service calls is obtained, or some information is manually set as the order information.

At the block S302, connecting, based on the call request, the customer service device corresponding to the interaction element, and displaying the order information on the call conversation interface in a form of a floating window.

The interaction element on the order detail interface of the commodity corresponds to a customer service device. After connecting the customer service device, the terminal can display the obtained order information in the form of the floating window on the call conversation interface. The floating window can be moved, and the user can move the floating window to any position on the screen as needed. During the call, the user wants to view the order information, just clicks the floating window to view the complete order information.

At the block S303, receiving a moving instruction inputted by the floating window, controlling the floating window to move on the call conversation interface and stay at a moving ending point of a moving operation.

Pressing and dragging the floating window to input the moving instruction. The terminal receives the moving instruction and controls the floating window to move on the call conversation interface. When pressing and dragging stops, the moving ending point is generated, and the terminal controls the floating window to stop at the moving ending point.

At the block S304, receiving a hiding instruction inputted for the order information to hide the order information.

The floating window can be partially indented into an interface border (i.e., hidden), the order information/the floating window can be hidden, and other contents on the call conversation interface will not be blocked, which is convenient for the user to perform other operations. When the order information is no longer needed during the call, clicking the floating window again to hide the order information.

In particular, the floating window in the embodiment can include a close button. When the order information is no longer needed, the user can also choose to click the close button on the floating window to close the floating window.

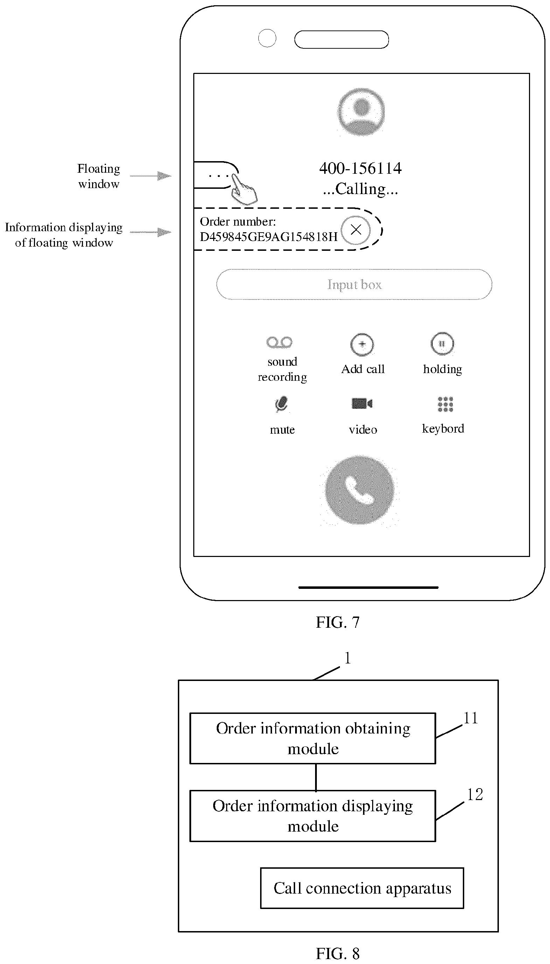

As illustrated in FIG. 7, which illustrates a schematic view of a call conversation interface according to an embodiment of the present disclosure.

The order information in the FIG. 7 is displayed on the call conversation interface in the form of the floating window, which can be moved to any position. When calling with the customer service, if it needs to provide the order information (such as order number), the user only needs to click the floating window (as illustrated by a solid line floating window in FIG. 7) and the order number will be fully displayed (as illustrated by a dotted line floating window in FIG. 7). Based on the order number information displayed in the floating window, the user will inform the customer service agent of the number. After using the information, clicking a "×" button in FIG. 7 to close the floating window. After the closing, the floating window will no longer be displayed on the call conversation interface.

In the embodiment of the present disclosure, the terminal receives the call request input by the user aiming at the interaction element on the order detail interface, obtains the order information of the order detail interface, connects the customer service device corresponding to the interaction element based on the call request, and displays the order information on the call conversation interface in the form of the floating window. The floating window in this embodiment can be moved and hidden. The order information is displayed on the call conversation interface in the form of the floating window, which will not hinder the user's vision, and can facilitate other operations.

The following is an apparatus embodiment of the present disclosure, which can be used to implement the method embodiment of the present disclosure. For details not disclosed in the apparatus embodiment of the present disclosure, please refer to the method embodiment of the present disclosure.

Please refer to FIG. 8, which illustrates a schematic structural view of a call connection apparatus according to an embodiment of the present disclosure. The call connection apparatus can be realized as all or part of a terminal through software, hardware, or a combination of both, and can also be integrated on a server as an independent module. The call connection apparatus in the embodiment of the present disclosure is applied to the terminal. The call connection apparatus 1 may include an order information obtaining module 11 and an order information displaying module 12.

The order information obtaining module 11 is configured to receive a call request inputted by an interaction element displayed on an order detail interface and obtain order information of the order detail interface, the interaction element being configured to make connection with a customer service device when triggered.

The order information displaying module 12 is configured to connect, based on the call request, the customer service device corresponding to the interaction element, and display the order information on a call conversation interface.

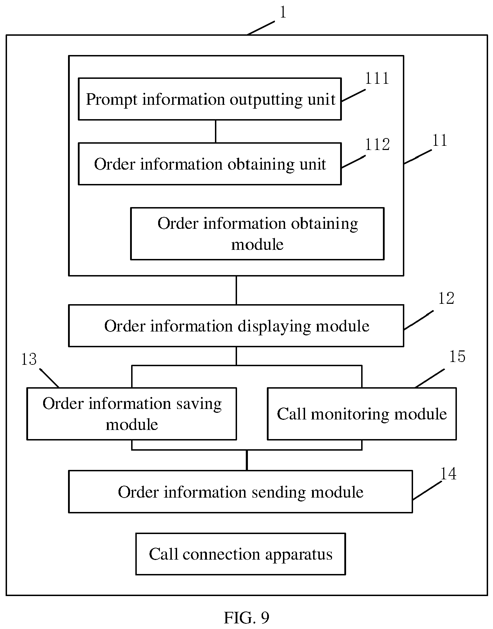

Please refer to FIG. 9, which illustrates a schematic structural view of a call connection apparatus according to an embodiment of the present disclosure.

As illustrated in FIG. 9, the order information obtaining module 11 in the call connection apparatus 1 provided by the embodiment of the present disclosure may include: a prompt information outputting unit 111 and an order information obtaining unit 112.

The prompt information outputting unit 111 is configured to receive the call request inputted by a customer service number displayed on the order detail interface and display call authorization prompt information.

The order information obtaining unit 112 is configured to receive a confirmation instruction inputted responding to the call authorization prompt information and obtain the order information of the order detail interface.

The call connection apparatus 1 may further include: an order information saving module 13 and an order information sending module 14.

The order information saving module 13 is configured to receive a copy operation for the order information after successfully connecting the customer service device corresponding to the interaction element, and save the order information to a pasteboard;
The order information sending module 14 is configured to receive a paste operation for an input box on the call conversation interface, paste the order information into the input box to send to the customer service device.

In an illustrated embodiment, the call connection apparatus 1 may further include: a call monitoring module 15.

The call monitoring module 15 is configured to monitor a call content after successfully connecting to the customer service device corresponding to the interaction element.

The order information sending module 14 is concretely configured to:
send the order information to the customer service device in response to the call content contains a preset keyword.

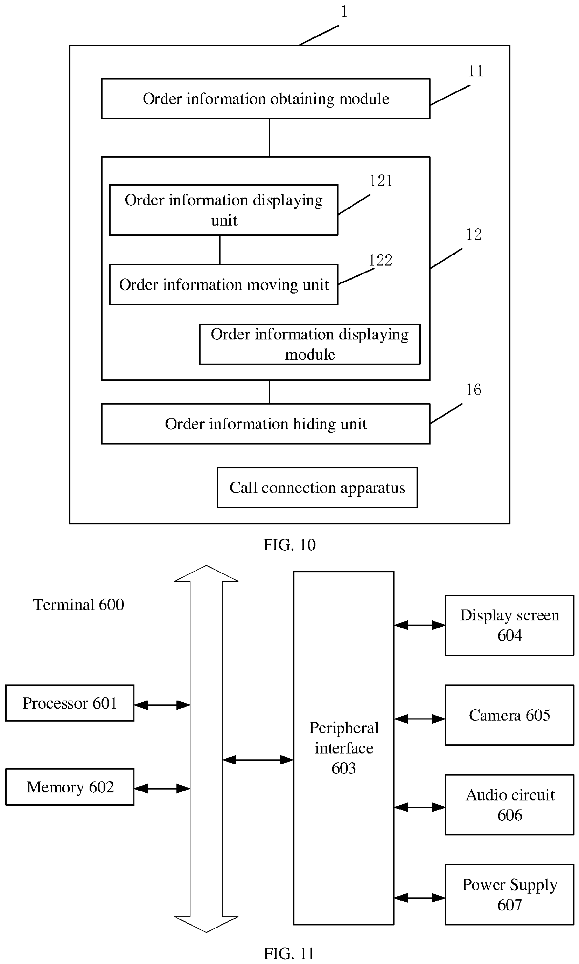

Please refer to FIG. 10, which illustrates a schematic structural view of a call connection apparatus according to an embodiment of the present disclosure.

As illustrated in FIG. 10, the order information displaying module 12 in the call connection apparatus 1 provided by the embodiment of the present disclosure may include: an order information displaying unit 121 and an order information moving unit 122

The order information displaying unit 121 is configured to connect, based on the call request, the customer service device corresponding to the interaction element, and display the order information on the call conversation interface in a form of a floating window.

The order information moving unit 122 is configured to receive a moving instruction inputted for the floating window, control the floating window to move on the call conversation interface and stay at a moving ending point of a moving operation.

The call connection apparatus 1 may further include: an order information hiding module 16.

The order information hiding module 16 is configured to receive a hiding instruction inputted for the order information to hide the order information.

It should be noted that when implementing the call connection method, the call connection apparatus provided by the above embodiment only illustrates the division of the above functional modules. In practical application, the above functions can be allocated by different functional modules according to needs, that is, an internal structure of the apparatus can be divided into different functional modules to complete all or part of the functions described above. In addition, the call connection apparatus provided by the above embodiment belongs to the same concept as the embodiment of the call connection method. The embodiment and implementation process are detailed in the method embodiment, which will not be repeated here.

The above serial numbers of the embodiments of the present disclosure are only for description and does not represent the advantages and disadvantages of the embodiments.

In the call connection apparatus provided by the embodiment of the present disclosure, the terminal receives the call request inputted by the user aiming at the interaction element on the order detail interface, obtains the order information of the order detail interface, connects the customer service device corresponding to the interaction element based on the call request, and displays the order information on the call conversation interface. The order detail interface in this embodiment includes the interaction element. If the customer service agent is needed to provide help during processing the business, the user does not need to specially enter a system phone to make a dial-up call. The user only needs to input the call request for the access to have a conversation with the customer service agent. For the customer service call made on the order detail interface, the relevant order information will be displayed on the call conversation interface synchronously. Therefore, it is convenient for users to quickly read the order information and provide it to the customer service agent, and thereby reducing the operation process of switching back and forth between interfaces. The information providing process is simple and convenient, and the communication efficiency is higher.

An embodiment of the present disclosure provides a non-transitory computer-readable storage medium stored with computer programs therein. The computer programs are configured to, when being executed by a processor, implement the blocks of the method of any of the foregoing embodiments. The non-transitory computer-readable storage medium may include, but is not limited to, any type of disk, including floppy disk, optical disk, digital video disc (DVD), compact disc read-only memory (CD-ROM), micro drive, magneto-optical disk, read-only memory (ROM), random access memory (RAM), erasable programmable read-only memory (EPROM), electrically erasable programmable read only memory (EEPROM), dynamic random access memory (DRAM), video random access memory (VRAM), flash memory device, magnetic card or optical card, nano system (including molecular memory IC), or any type of medium or device suitable for storing instructions and/or data.

An embodiment of the present disclosure provides a terminal, including a memory, a processor and computer programs stored in the memory and executable by the processor. The processor is configured to, when executing the computer programs, implement the blocks of the method of any of the above embodiments.

Please refer to FIG. 11, which illustrates a schematic structural block diagram of a terminal according to an embodiment of the present disclosure.

As illustrated in FIG. 11, the terminal 600 may include a processor 601 and a memory 602.

In the embodiment of the present disclosure, the processor 601 is a control center of a computer system, which can be a processor of a physical machine or a processor of a virtual machine. The processor 601 may include one or more cores, such as a 4-core processor, an 8-core processor, and the like. The processor 601 can be implemented in at least one hardware form of digital signal processing (DSP), field programmable gate array (FPGA) and programmable logic array (PLA). The processor 601 may also include a main processor and a coprocessor. The main processor is a processor for processing data in the wake-up state, also known as a central processing unit (CPU); and the coprocessor is a low-power processor used to process data in standby mode.

The memory 602 may include one or more computer-readable storage medium, which may be non-transitory. The memory 602 may also include a high-speed random-access memory and a nonvolatile memory, such as one or more disk storage devices and flash storage devices. In some embodiments of the present disclosure, the non-transitory computer-readable storage medium in the memory 602 is used to store at least one instruction for implemented by the processor 601 to implement the method in the embodiments of the present disclosure.

In some embodiments, the terminal 600 may further include a peripheral interface 603 and at least one peripheral device. The processor 601, the memory 602 and the peripheral interface 603 may be connected through buses or signal lines. Each peripheral device can be connected to the peripheral interface 603 through a bus, signal line or circuit board. Specifically, the peripheral device includes at least one of a display screen 604, a camera 605, and an audio circuit 606.

The peripheral interface 603 may be configured to connect at least one peripheral device related to input/output (I/O) to the processor 601 and the memory 602. In some embodiments of the present disclosure, the processor 601, the memory 602 and the peripheral interface 603 are integrated on a same chip or circuit board. In some other embodiments of the present disclosure, any one or all of the processor 601, the memory 602 and the peripheral interface 603 may be implemented on a separate chip or circuit board. The embodiments of the present disclosure are not specifically limited to this.

The display screen 604 is configured to display the user interface (UI). The UI can include graphics, text, icons, videos, and any combination thereof. When the display screen 604 is a touch display screen, the display screen 604 further has the ability to collect touch signals on or above the surface of the display screen 604. The touch signal can be inputted to the processor 601 as a control signal for processing. At this time, the display screen 604 can further be configured to provide virtual buttons and/or virtual keyboards, also known as soft buttons and/or soft keyboards. In some embodiments of the present disclosure, the display screen 604 can be one, arranged on a front panel of the terminal 600. In other embodiments of the present disclosure, the display screen 604 may be at least two, which are respectively arranged on different surfaces of the terminal 600 or in a folded design. In still other embodiments of the present disclosure, the display screen 604 may be a flexible display screen arranged on a curved surface or folding surface of the terminal 600. Even, the display screen 604 can be set as a non-rectangular irregular figure, that is, a special-shaped screen. The display screen 604 can be made of liquid crystal display (LCD), organic light emitting diode (OLED) and other materials.

The camera 605 is configured to collect images or videos. In an illustrated embodiment, the camera 605 includes a front camera and a rear camera. Generally, the front camera is arranged on the front panel of the terminal, and the rear camera is arranged on the back of the terminal. In some embodiments, there are at least two rear cameras, which are any one of a main camera, a depth of field camera, a wide-angle camera and a telephoto camera respectively, thereby to realize the fusion of the main camera and the depth of field camera to realize the background virtualization function, the fusion of the main camera and the wide-angle camera to realize the panoramic shooting, virtual reality (VR) shooting function or other fusion shooting functions. In some embodiments of the present disclosure, the camera 605 may also include a flash lamp. The flash lamp can be a monochrome temperature flash lamp or a two-color temperature flash lamp. Dual color temperature flash lamp refers to the combination of warm light flash lamp and cold light flash lamp, which can be configured for light compensation under different color temperatures.

The audio circuit 606 may include a microphone and a speaker. The microphone is configured to collect the sound waves of the user and the environment, convert the sound waves into electrical signals and input them to the processor 601 for processing. For the purpose of stereo acquisition or noise reduction, the microphones can be multiple, which are respectively arranged on different parts of the terminal 600. The microphone can also be an array microphone or an omnidirectional acquisition microphone.

The power supply 607 is configured to supply power to each component in the terminal 600. The power supply 607 may be alternating current (AC), direct current (DC), disposable battery or rechargeable battery. When the power supply 607 includes a rechargeable battery, the rechargeable battery may be a wired rechargeable battery or a wireless rechargeable battery. The wired rechargeable battery is a battery charged through wired line, and the wireless rechargeable battery is a battery charged through wireless coil. The rechargeable battery can also be used to support fast charging technology.

The structure block diagram of the terminal illustrated in the embodiment of the present disclosure does not constitute a limitation on the terminal 600. The terminal 600 may include more or fewer components than illustrated in the figure, or combine some components, or adopt different component arrangements.

In the present disclosure, the terms "first", "second" and the like are only used for descriptive purposes and cannot be understood as indicating or implying relative importance or order. The term "multiple" refers to two or more, unless otherwise expressly defined. The terms "installation", "connected", "connection", "fixation" and other terms shall be understood in a broad sense. For example, "connection" can be fixed connection, removable connection, or integrated connection; "connected" can be directly connected or indirectly connected through an intermediate media. For those skilled in the art, the specific meaning of the above terms in the present disclosure can be understood according to the specific circumstances.

In the description of this present disclosure, it should be understood that the orientation or position relationship indicated by the terms "up", "down" and so on is based on the orientation or position relationship illustrated in the attached drawings, which is only for the convenience of describing this present disclosure and simplifying the description, rather than indicating or implying that the apparatus or unit referred to must have a specific direction, structure and operation in a specific orientation. Therefore, it cannot be understood as a limitation of the present disclosure.

The above is only the illustrated embodiments of the present disclosure, but the scope of protection of the present disclosure is not limited to this. Any technician familiar with the technical field can easily think of changes or replacements within the technical scope disclosed in the present disclosure, which should be covered by the scope of protection of the present disclosure. Therefore, the equivalent changes made according to the claims of the present disclosure still fall within the scope of the present disclosure.

## Claims

1. A call connection method, comprising:
receiving a call request inputted by an interaction element displayed on an order detail interface and obtaining order information of the order detail interface; wherein the interaction element is configured to make connection with a customer service device when triggered; and
connecting, based on the call request, the customer service device corresponding to the interaction element, and displaying the order information on a call conversation interface.

2. The method according to claim 1, wherein after the displaying the order information on a call conversation interface, the method further comprises:
after successfully connecting the customer service device corresponding to the interaction element, receiving a copy operation for the order information, and saving the order information to a pasteboard; and
receiving a paste operation for an input box on the call conversation interface, and pasting the order information into the input box to send to the customer service device.

3. The method according to claim 2, wherein the call conversation interface is configured to display a copy button, and the order information and the copy button are displayed on the call conversation interface after a user successfully calls with a customer service agent.

4. The method according to claim 1, wherein the method further comprises:
after successfully connecting the customer service device corresponding to the interaction element, monitoring a call content; and
sending the order information to the customer service device in response to the call content contains a preset keyword.

5. The method according to claim 1, wherein the receiving a call request inputted by an interaction element displayed on an order detail interface, comprises:
receiving the call request inputted by a customer service number displayed on the order detail interface, and displaying call authorization prompt information; and
receiving a confirmation instruction inputted responding to the call authorization prompt information.

6. The method according to claim 4, wherein the method further comprises:
calling a customer service agent on the order detail interface in response to authorization is agreed.

7. The method according to claim 4, wherein the method further comprises:
calling a customer service agent on a system telephone dialing interface in response to authorization is refused.

8. The method according to claim 1, wherein the displaying the order information on a call conversation interface, comprises:
displaying the order information on the call conversation interface in a form of a floating window; and
receiving a moving instruction inputted by the floating window, controlling the floating window to move on the call conversation interface and stay at a moving ending point of a moving operation.

9. The method according to claim 1, wherein the method further comprises:
receiving a hiding instruction for the order information to hide the order information.

10. The method according to claim 1, wherein the displaying the order information on a call conversation interface, comprises:
displaying the order information on the call conversation interface after the connecting is successful.

11. The method according to claim 4, wherein the method further comprises:
giving corresponding feedback and clearing information in an input box after the order information is sent successfully.

12. The method according to claim 1, wherein the interaction element comprises one of a button with a telephone icon and a customer service telephone number displayed in text.

13. A call connection apparatus, comprising:
an order information obtaining module, configured to receive a call request inputted by an interaction element displayed on an order detail interface and obtain order information of the order detail interface; wherein the interaction element is configured to make connection with a customer service device when triggered; and
an order information displaying module, configured to connect, based on the call request, the customer service device corresponding to the interaction element, and display the order information on a call conversation interface.

14. The apparatus according to claim 13, wherein the apparatus further comprises:
an order information saving module, configured to after successfully connecting the customer service device corresponding to the interaction element, receive a copy operation for the order information, and save the order information to a pasteboard; and
an order information sending module, configured to receive a paste operation for an input box on the call conversation interface, and paste the order information into the input box to send to the customer service device.

15. The apparatus according to claim 13, wherein the apparatus further comprises:
a call monitoring module, configured to monitor a call content after successfully connecting the customer service device corresponding to the interaction element; and
the order information sending module is concretely configured to:
send the order information to the customer service device in response to the call content contains a preset keyword.

16. The apparatus according to claim 13, wherein the order information obtaining module is concretely configured to:
receive the call request inputted by a customer service number displayed on the order detail interface, and display call authorization prompt information; and
receive a confirmation instruction inputted responding to the call authorization prompt information.

17. The apparatus according to claim 13, wherein the order information displaying module comprises:
an order information displaying unit, configured to connect, based on the call request, the customer service device corresponding to the interaction element, and display the order information on the call conversation interface in a form of a floating window; and
an order information moving unit, configured to receive a moving instruction inputted by the floating window, control the floating window to move on the call conversation interface and stay at a moving ending point of a moving operation.

18. The method according to claim 13, wherein the apparatus further comprises:
an order information hiding module, configured to receive a hiding instruction inputted for the order information to hide the order information.

19. A non-transitory computer-readable storage medium stored with computer programs therein, wherein the computer programs are configured to, when being executed by a processor, implement steps in the method according to any one of claims 1-12.

20. A terminal comprising: a memory, a processor and computer programs stored in the memory and executable by the processor, wherein the processor is configured to, when executes the computer programs, implement steps in the method according to any one of claims 1-12.
